**Europäisches Patentamt**

**European Patent Office**

**Office européen des brevets**

(19)

(11) Veröffentlichungsnummer: **0 111 856**

**A2**

(12) **EUROPÄISCHE PATENTANMELDUNG**

(21) Anmeldenummer: **83112440.9**

(22) Anmeldetag: **10.12.83**

(51) Int. Cl.³: **B 23 D 47/02**
**B 23 D 45/04, B 23 D 45/12**

(30) Priorität: **17.12.82 DE 3246804**

(43) Veröffentlichungstag der Anmeldung:
**27.06.84 Patentblatt 84/26**

(84) Benannte Vertragsstaaten:
**DE FR GB IT**

(71) Anmelder: **TREMAG Trennmaschinen-Gesellschaft mbH**
**Am Alten Schacht 8**
**D-4100 Duisburg 17(DE)**

(72) Erfinder: **Ehm, Karl Horst, Dipl.-Ing.**
**Am Alten Schacht 8**
**D-4100 Duisburg 17(DE)**

(72) Erfinder: **Orendi, Roderich Rolf, Ing grad.**
**Heltorfer Mark 15**
**D-4000 Düsseldorf 31(DE)**

(74) Vertreter: **Bonsmann, Manfred, Dipl.-Ing.**
**Kaldenkirchener Strasse 35a**
**D-4050 Mönchengladbach 1(DE)**

(54) **Trennvorrichtung.**

(57) Eine beispielsweise als Kreissäge zur Metallbearbeitung ausgebildete Trennvorrichtung mit einer an einem Maschinengestell gelagerten, als Schwinge ausgebildeten und von unten nach oben arbeitenden Trennwerkzeug ist so ausgestaltet, daß das Maschinengestell eine im wesentlichen vertikal angeordnete Trageplatte aufweist. Die Trageplatte, die seitlich von Stützeinrichtungen gehalten ist, weist ein Schwenklager für die Schwinge auf, welches derart angeordnet ist, daß die Trennwerkzeugebene im wesentlichen mit der Mitte des Schwenklagers fluchtet. Die Einleitung der Vorschubkräfte in die Schwinge erfolgt nahe der Trennebene und die Trageplatte ist oben zur Anbringung von Spanneinrichtungen ausgebildet. Durch diese Ausgestaltung wird das bei herkömmlichen, von unten nach oben arbeitenden Trennvorrichtungen vorhandene kastenartige Maschinengestell mit horizontaler Abdeckplatte und die damit verbundenen Nachteile vermieden.

FIG. 3

EP 0 111 856 A2

Trennvorrichtung
<u>————————————</u>

Die Erfindung betrifft eine Trennvorrichtung, insbesondere Kreissäge zur Metallbearbeitung, mit einer
an einem Maschinengestell gelagerten Schwinge mit
Trennwerkzeug, welche von unten nach oben arbeitet,
mit einer Vorschubeinrichtung für die Schwinge und
mit Spanneinrichtungen zur Befestigung der zu bearbeitenden Werkstücke.

Bekannte derartige, als Kreissäge zur Metallbearbeitung ausgebildete Trennvorrichtungen weisen ein mehr
oder weniger geschlossen ausgebildetes, kastenförmiges Maschinengestell auf, welches nach oben von einer
Abdeckplatte abgedeckt ist. Die Schwinge ist unterhalb der Abdeckplatte angeordnet und kann im Untersatz gelagert sein. Die Sägewelle ist auf der Oberseite der Schwinge gelagert, und die Abdeckplatte
ist geschlitzt ausgebildet. Das zu sägende Material
liegt oben auf der Abdeckplatte auf und wird mittels
der Spanneinrichtungen festgeklemmt. Der Sägeschnitt
erfolgt dann während der Bewegung der Schwinge von
unten nach oben durch den Schlitz der Abdeckplatte.

Bei anderen bekannten Ausführungsformen der eingangs
genannten Trennvorrichtungen sind die Lager für die
Schwinge fest mit der Unterseite der Abdeckplatte
verbunden (DE-OS 24 54 717). Bei derartigen Anordnungen besteht die Möglichkeit, die Abdeckplatte in
horizontaler Ebene drehbar anzuordnen, wodurch auch
Schrägschnitte ermöglicht werden.

Die bekannten Trennvorrichtungen weisen mehrere Nachteile auf. Die wichtigsten sind:

Die Abdeckplatte, auf die auch gleichzeitig das zu sägende Material aufgelegt wird, muß so groß sein, daß
das ganze Maschinengestell ausreichend abgedeckt wird.
Da aber das Maschinengestell die gesamte Schwinge einschließlich des motorischen Antriebes des Trennwerkzeuges und der Vorschubeinrichtungen aufnehmen muß,
ergeben sich im Verhältnis zur Größe des Trennwerkzeuges (beispielsweise des Sägeblattes) sehr große Abmessungen für die Abdeckplatten, welche aus Starrheitsgründen wiederum zu relativ dick ausgebildeten Abdeckplatten führen.

Da das Trennwerkzeug an der unterhalb der Abdeckplatte
angeordneten Schwinge angebracht ist und der Trennvorgang bei einer Vorschubbewegung des Trennwerkzeuges
durch den Schlitz in der Abdeckplatte von unten nach
oben erfolgt, ergibt sich infolge der Dicke der Abdeckplatte eine wesentliche Minderung des Schnittbereiches
gegenüber dem Schnittbereich von Trennvorrichtungen,
bei denen keine Abdeckplatte vorgesehen ist. Die prozentuale Minderung der Schnitthöhe von Trennvorrichtungen mit einer Abdeckplatte kann gegenüber solchen
ohne Abdeckplatte bis zu etwa 30 % betragen.

Ein anderer Nachteil der beschriebenen Ausführungsformen besteht darin, daß aus verschiedenen Gründen in
den Wänden des Maschinengestells große Öffnungen vorgesehen sein müssen. Solche Öffnungen sind u.a. erforderlich für die Wartung des motorischen Antriebes,
der Sägeschlittenschmierung und der Vorschubeinrichtung sowie für den Sägeblattwechsel, die Einstellung
der Spänebürsten bzw. der Fingerspäneräumer, für die
Einstellung der Kühleinrichtung für das Trennwerkzeug
u.dgl.. Alle diese Öffnungen schwächen das Maschinengstell und führen zu hohem Aufwand insbesondere dann,
wenn höhere Ansprüche an die Zerspanungsleistung und damit an die Starrheit der Trennvorrichtung gestellt werden. Hinzu kommt, daß aus Sicherheitsgründen alle Öffnungen gut abgedeckt werden müssen, was wiederum zusätzliche Kosten erfordert.

Ein weiterer Nachteil der beschriebenen Ausführungsformen von Trennvorrichtungen besteht darin, daß der grosse Platzbedarf für das Maschinengestell die Integration der Trennvorrichtung in ein automatisch arbeitendes Produktionssystem sehr erschwert.

Ausreichend schwingungsfeste Trennvorrichtungen der beschriebenen Art erfordern somit einen hohen Bauaufwand bei gleichzeitiger beträchtlicher Reduzierung des theoretisch möglichen Schneidbereiches. Mit größer werdenden Trennwerkzeugen (z.B. Sägeblättern) wachsen die in Bezug auf die Starrheit der Maschine erforderlichen Aufwendungen, da die Gestaltsfestigkeit bei größer werdenden Abmessungen des Untersatzes rasch abnimmt und ein Ausgleich über zusätzliche Verrippungen sowie Erhöhung der Wandstärken immer schwieriger und aufwendiger wird.

Die Entwicklung der beispielsweise als Kaltkreissägen ausgebildeten Trennvorrichtungen führt andererseits in Richtung immer höherer Schnittleistungen, wobei auch in immer stärkerem Maße hartmetallbestückte Sägeblätter zum Einsatz kommen. Diese Entwicklung verlangt aber immer starrere Maschinen, bei denen Schwingungsamplituden von weniger als 0,015 mm in Vorschubrichtung erforderlich sind. Die bekannten Ausführungsformen der eingangs genannten Art können diesen Forderungen nicht oder nur mit großem Aufwand entsprechen, wobei mit steigendem Durchmesser des Trennwerkzeuges der notwendige Bauaufwand überproportional wächst.

Die erwähnten Nachteile haben schließlich dazu geführt, daß die eingangs beschriebenen Trennvorrichtungen in
der Praxis nur bei Trennwerkzeugen mit relativ kleinen
Durchmessern (z.B. Sägeblattdurchmessern) zur Anwendung
kommen und überdies nur bei dem Sägen von Rohr- oder
Profilmaterial eingesetzt werden.

Andererseits weist aber die Bauart von Trennvorrichtungen mit einem von unten nach oben arbeitenden Trennwerkzeug insbesondere bei dem Sägen von Hohlprofilen,
z.B. Rohren, große Vorteile auf. Diese bestehen im wesentlichen darin, daß bei einem von der Unterseite des
zu trennenden Hohlprofiles erfolgenden Trennvorgang
Späne nur in geringstem Ausmaß in den Schnitt eingezogen werden. Dadurch erreicht man mit derartigen Trennvorrichtungen wesentlich glattere Schnittflächen als
bei beispielsweise von oben nach unten arbeitenden
Trennvorrichtungen, bei denen die Schnittflächen in
großem Umfange durch eingezogene Späne zerstört oder
beschädigt werden.

Der Erfindung liegt die Aufgabe zugrunde, eine Trennvorrichtung der eingangs genannten Art zu schaffen,
die also den Vorteil geringster Beschädigung der
Schnittfläche bei dem Trennen von Hohlprofilen aufweist, die jedoch andererseits für extrem hohe Durchsatzleistungen geeignet ist, bei der der Schnittbereich nicht nennenswert eingeengt ist und bei der
die Zugänglichkeit zu dem Getriebe und allen übrigen
Elementen in ausreichender Weise möglich ist, und die
einen geringen Raumbedarf aufweist.

Diese Aufgabe wird durch die in Patentanspruch 1 angegebenen Maßnahmen gelöst. Bei der erfindungsgemäßen
Ausgestaltung des Maschinengestells fällt die Trennwerkzeugebene nahezu mit einer Flachseite der Trageplatte zusammen. Der Kraftlinienfluß wird auf sehr
kurzem Weg geschlossen. Die bei dem Trennvorgang auftretenden Kräfte, nämlich die Spannkräfte, die in der Schwingenlagerung auftretenden Kräfte, die Vorschubkräfte und die von dem Trennwerkzeug ausgeübten Kräfte liegen im wesentlichen in einer vertikalen Ebene
und können somit von der vertikalen Trageplatte aufgenommen werden. Ggf. vorhandene Verwindungsmomente sind
infolge kurzer Hebelarme sehr klein. Die Trageplatte,
die das Hauptelement des Maschinengestells bildet, kann
ausreichend starr gestaltet werden, wobei die Stützeinrichtungen lediglich die Aufgabe haben, die Trageplatte
zu halten. Durch den Wegfall der bei dem kastenartig
ausgebildeten Maschinengestell mit Abdeckplatte nach
dem Stande der Technik erforderlichen Wände im Bereich
des Maschinengestells wird eine gute Zugänglichkeit zu
dem Sägegetriebe ermöglicht. Auch die durch die Abdeckplatte bei den bekannten Ausführungsformen gegebenen
Nachteile werden verhindert bzw. verringert.

Erfindungsgemäß besteht sowohl die Möglichkeit, die
Schwinge und das Trennwerkzeug auf der gleichen Flachseite der Trageplatte anzuordnen, als auch die Möglichkeit, daß die Schwinge und das Trennwerkzeug auf gegenüberliegenden Flachseiten der Trageplatte angeordnet
sind. Im letztgenannten Fall sind die Schwinge und das
Trennwerkzeug über einen eine Ausnehmung in der Trageplatte durchfassenden Schwingenteil verbunden.

Für den Fall, daß die Hauptmasse der Schwinge auf
einer Flachseite der Trageplatte angeordnet ist, wird
der Schwinge eine Aufnahmeeinrichtung für das Gewichtsmoment der Schwinge zugeordnet. Diese Aufnahmeeinrichtung kann beispielsweise so ausgebildet sein, daß sie
ein an einer Stütze angeordnetes, mit dem Schwenklager
fluchtendes weiteres Schwenklager für einen an der
Schwinge angeordneten Lagerzapfen aufweist.

Es besteht auch die Möglichkeit, die Aufnahmeeinrichtung als hydraulischen Zylinder oder als Gegengewichtseinrichtung auszubilden. In diesen Fällen wird zweckmäßigerweise zur Führung der Schwinge in der Schwenkebene eine zwischen Trageplatte und einer Führungsplatte oder übergreifend auf gegenüberliegenden Seiten gegen die Trageplatte anliegende Rollenführungseinrichtung vorgesehen.

Weiterhin kann in vorteilhafter Weise vorgesehen sein,
daß die Haupttrageplatte über der Ausnehmung für den
durchfassenden Schwingenteil eine brückenförmige Gestaltung mit einer dem Schwingenteil im wesentlichen
angepaßten Brückenöffnung aufweist, und die so gebildete Brücke in ihrer Mitte von geringer Dicke ist.
Die von der "Brücke" aufgenommenen Gewichtskräfte des
zu trennenden Gutes werden infolge der im wesentlichen
vertikalen Anordnung der Trageplatte wesentlich günstiger als von der horizontalen Abdeckplatte nach dem
Stande der Technik aufgenommen. Die Dicke der "Brücke"
kann in ihrer Mitte sehr gering (bis zum Wert Null) ausgebildet sein, was einen großen Schnittbereich im Vergleich zu dem durch die Dicke der Abdeckplatte verminderten Schnittbereich der bekannten Trennvorrichtungen zur Folge hat.

In weiterer Ausbildung der Erfindung kann vorgesehen
sein, daß an der Trageplatte eine zweite Spanneinrichtung angebracht ist. Dies ermöglicht es, beidseitig
des Trennwerkzeuges eine vollwertige Spanneinrichtung
vorzusehen. Damit wird ein vollwertiges Halten des zu
trennenden Gutes von beiden Seiten des Trennwerkzeuges her ermöglicht, was insbesondere bei dem Abtrennen
von Anfangsstücken und Endstücken (bei gleicher Transportrichtung des zu trennenden Gutes) günstig ist.

Weitere Vorteile und Einzelheiten der Erfindung ergeben sich aus der nachfolgenden Beschreibung von Ausfüh-

- 7 -

rungsbeispielen anhand der Zeichnungen. Es zeigen:

Fig. 1    eine Vorderansicht einer ersten Ausführungsform einer Kreissäge gemäß der Erfindung;

Fig. 2    eine Seitenansicht der Kreissäge gemäß Fig.
1, von links gesehen;

Fig. 3    eine Draufsicht auf die Kreissäge gemäß Fig.1;

Fig. 4    eine Rückansicht der Kreissäge gemäß Fig. 1;

Fig. 5    eine Seitenansicht der Kreissäge gemäß Fig. 1,
von rechts gesehen;

Fig. 6    eine Vorderansicht einer zweiten Ausführungsform einer Kreissäge gemäß der Erfindung;

Fig. 7    eine Seitenansicht der Kreissäge gemäß Fig. 6,
gesehen von links;

Fig. 8    eine Draufsicht auf die Kreissäge gemäß Fig. 6;

Fig. 9    eine Rückansicht der Kreissäge gemäß Fig. 6;

Fig. 10   eine Seitenansicht der Kreissäge gemäß Fig. 6,
gesehen von rechts.

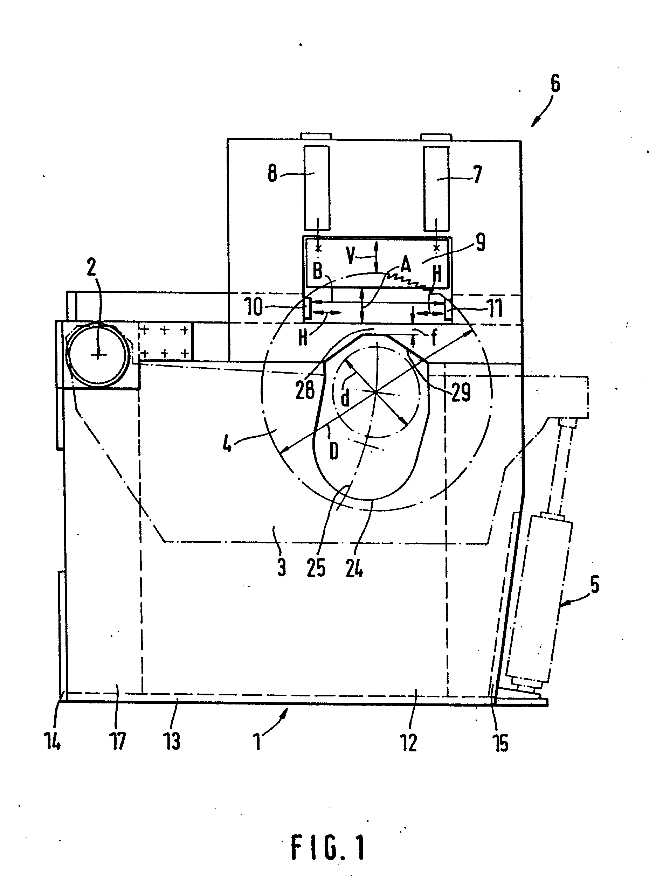

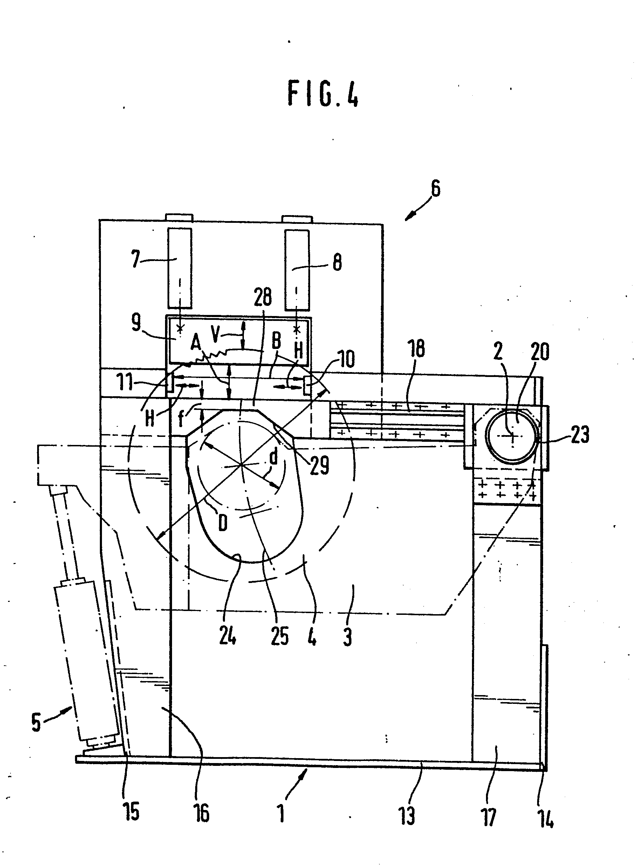

Die in den Figuren 1 bis 5 als erste Ausführungsform
der erfindungsgemäßen Trennvorrichtung dargestellte
Kreissäge weist eine an einem Maschinengestell 1 um
einen Drehpunkt 2 verschwenkbar gelagerte Schwinge 3
auf, die ein als Sägeblatt mit dem Außendurchmesser D
ausgebildetes Trennwerkzeug 4 aufweist. Eine als Zylinder-Kolbenanordnung ausgebildete Vorschubeinrichtung ist mit 5 bezeichnet. Zum Einspannen des beispielsweise als Rohre (nicht dargestellt) ausgebildeten, zu sägenden Gutes ist eine insgesamt mit 6 bezeichnete Spanneinrichtung vorgesehen, die einen über Einrichtungen 7, 8 betätigbaren, vertikalen Spannbacken 9 und schematisch dargestellte horizontale Spannbacken 10, 11 aufweist. Der vertikale Spannbacken ist in Pfeilrichtung V bewegbar, während die horizontalen Spannbacken in Richtung H bewegbar sind. Der maximale Öffnungsbereich der Spannbacken ist mit A (vertikale Richtung) und mit B (horizontale Richtung) bezeichnet.

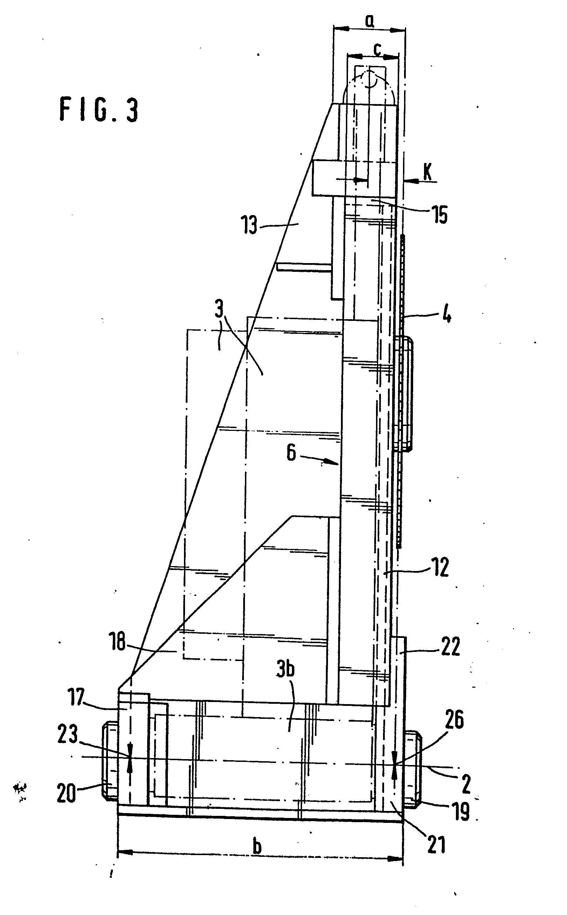

Das Maschinengestell 1 weist eine vertikal angeordnete Trageplatte 12 auf, die auf einer Bodenplatte 13 aufliegt und von Stützeinrichtungen gehalten ist. Die Stützeinrichtungen weisen bei dem in den Figuren 1 bis 5 dargestellten ersten Ausführungsbeispiel Stützplatten 14, 15, eine Hilfswand 16, eine Stütze 17 und einen Ausleger 18 auf. Die Einzelteile der Stützeinrichtungen sind in geeigneter Weise untereinander mit der Trageplatte 12 verbunden. Die Stützeinrichtungen sind sämtlich auf derjenigen Flachseite der Trageplatte 12 angebracht, welche dem Sägeblatt 4 gegenüberliegt. Wie insbesondere aus Fig. 3 ersichtlich, ist auch die Schwinge 3 auf der dem Sägeblatt 4 gegenüberliegenden Flachseite der Trageplatte 12 angeordnet. Die Schwinge weist an einem Schwingenteil 3b Lagerzapfen 19 und 20 auf. Der Lagerzapfen 19 ist in einem Schwenklager 21 der Trageplatte 12 bzw. eines mit der Trageplatte 12 verbundenen Zapfenlagergehäuses 22 gelagert, während der Lagerzapfen 20 in einem von der Stütze 17 abgestützten, mit dem Schwenklager 21 fluchtenden Schwenklager 23 gelagert ist. Das Gewichtsmoment der an der dem Sägeblatt 4 gegenüberliegenden Flachseite der Trageplatte 12 angeordneten und in der Trageplatte 12 in dem Schwenklager 21 gelagerten Schwinge 3 wird somit von dem auf der Stütze 17 angeordneten Schwenklager 23 aufgenommen. Das von dem mit S bezeichneten Schwerpunkt der Schwinge nach unten im Abstand Q von dem Gewicht G der Schwinge 3 ausgeübte Moment wird somit von dem
Schwenklager 23 aufgenommen. Die Einzelheiten der
Schwinge 3, die u.a. einen Antrieb und ein Sägegetriebe enthält, sind nicht im einzelnen dargestellt.

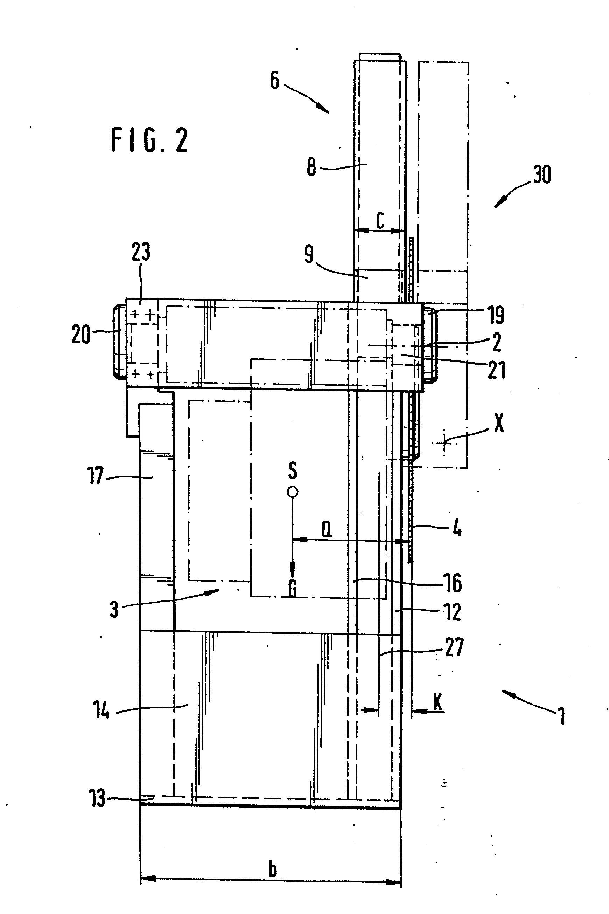

Die Schwinge 3 ist mit dem auf der gegenüberliegenden
Flachseite der Trageplatte 12 angeordneten Sägeblatt 4
über ein Schwingenteil 3a verbunden, welches eine Ausnehmung 24 in der Trageplatte 12 durchfaßt. Die Ausnehmung 24 ist so ausgebildet, daß das Schwingenteil 3a
der strichpunktiert eingezeichneten und mit 25 bezeichneten Vorschubbewegung der Schwinge 3 folgen kann. Die
Ebene des Sägeblattes 4 fluchtet mit der mit 26 bezeichneten Mitte des Schwenklagers 21, was zur Folge hat,
daß keine Verwindungsmomente auftreten. Der Befestigungsflanschdurchmesser des Sägeblattes 4 ist mit d bezeichnet. Der Angriff der Vorschubeinrichtung 5 an der
Schwinge 3 erfolgt bei dem dargestellten Ausführungsbeispiel, wie aus Fig. 2 ersichtlich, bei 27 und liegt
somit um das Maß K zu der Ebene des Sägeblattes 4 versetzt. Wie ersichtlich, ist der Hebelarm K relativ
kurz, so daß somit die Einleitung der Vorschubkräfte
in die Schwinge 3 nahe der durch das Sägeblatt 4 verlaufenden gedachten Schwenkebene der Schwinge 3 und
damit der Trennebene erfolgt. Es wäre ohne weiteres
möglich, den Vorschubangriffspunkt an der Schwinge 3
so zu versetzen, daß das Maß K = 0 wird. Bei der dargestellten Ausführungsform wurde jedoch davon ausgegangen, daß ein kleines Restmoment um den Hebelarm K
keinen großen Einfluß auf einen sicheren Schnittverlauf ausübt, da das Moment, welches durch das Gewicht
G der Schwinge 3 um den Hebelarm Q entsteht, überwiegt.

Die bei dem Trennvorgang auftretenden Kräfte, so die
Vorschubkraft, die von dem Trennwerkzeug ausgeübte
Schneidkraft und die auf das Schwenklager 21 ausgeübten Lagerkräfte liegen sämtlich im wesentlichen in einer vertikalen Ebene und werden von der Trageplatte
12 aufgenommen. Die Trageplatte 12, die oben zur Anbringung der Spanneinrichtungen 6 ausgebildet ist, ist
über der Ausnehmung 24 für den durchfassenden Schwingenteil 3a brückenförmig gestaltet. Die so gebildete
Brücke 28 weist in ihrer Mitte eine geringe Dicke auf,
welche mit f bezeichnet ist. Die Brückenöffnung 29 ist
in ihrer Gestaltung dem Schwingenteil 3a angepaßt. Es
ist ersichtlich, daß die maximal erzielbare Schnitthöhe bei einer Schneidbewegung von unten nach oben durch
die Abmessung f der Brücke 28 begrenzt wird. Die Abmessung f kann bei der Erfindung sehr klein gehalten werden. Grundsätzlich ist es sogar möglich, die Brücke aus
zwei in der Mitte lediglich linienförmig gegeneinander
anliegenden Teilen auszubilden, so daß dann die Abmessung f und damit die durch die Brücke bedingte Minderung der Schnitthöhe des Trennwerkzeuges (theoretisch)
sich dem Wert Null nähert oder ihn sogar erreicht. Auch
die Spannkräfte werden in vertikaler Richtung in die
vertikale Trageplatte 12 eingeleitet.

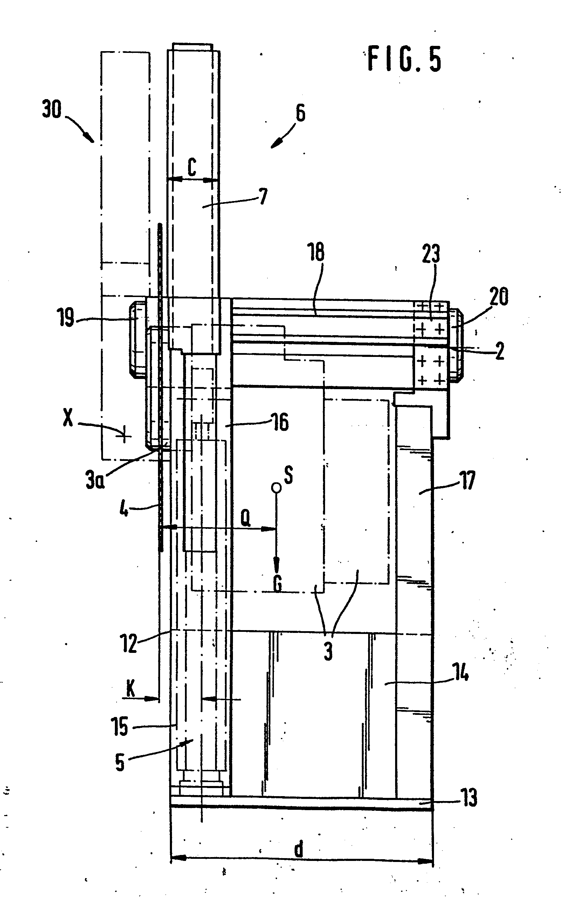

Wie in Fig. 2 und in Fig. 5 in strichpunktierten Linien
angedeutet, kann an der Trageplatte 12 auf der der
Spanneinrichtung 6 gegenüberliegenden Seite des Sägeblattes 4 eine zweite Spanneinrichtung 30 angeordnet
sein. Diese kann sowohl starr mit der Trageplatte 12
verbunden, als auch verschwenkbar um die Achse X angeordnet sein. Wie ohne weiteres ersichtlich, bleiben
auch im Bereich der zweiten Spanneinrichtung 30 alle
Spannkräfte auf kurzem Weg in sich geschlossen, während
die durch den Trennvorgang entstehenden Kräfte über
einen sehr kurzen Hebelarm in die Trageplatte 12 eingeleitet werden und nur eine sehr geringe Verbindung entsteht.

Insbesondere aus Fig. 3 ist ersichtlich, daß die Trennvorrichtung infolge der erfindungsgemäßen Gestaltung
nur einen geringen Raumbedarf aufweist. Die Abmessungen a der Bodenplatte 13 an der einen Stirnseite sind wesentlich geringer als die Abmessungen b an der anderen Stirnseite. Lediglich der Vollständigkeit halber
sei erwähnt, daß die Breite der (nicht im einzelnen
beschriebenen) Seitenplatten der Spanneinrichtung 9
mit c bezeichnet ist (Fig. 3 und Fig. 5).

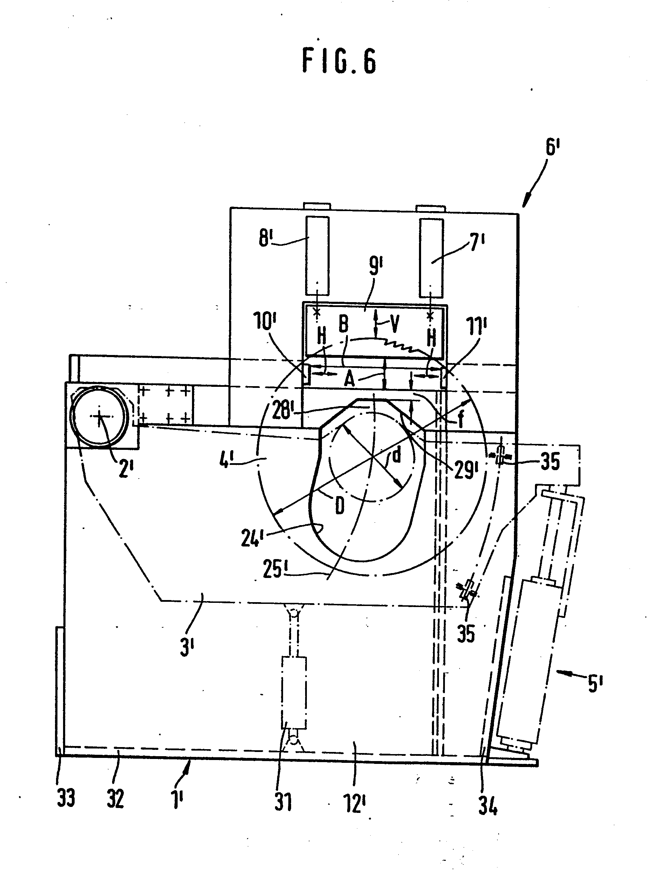

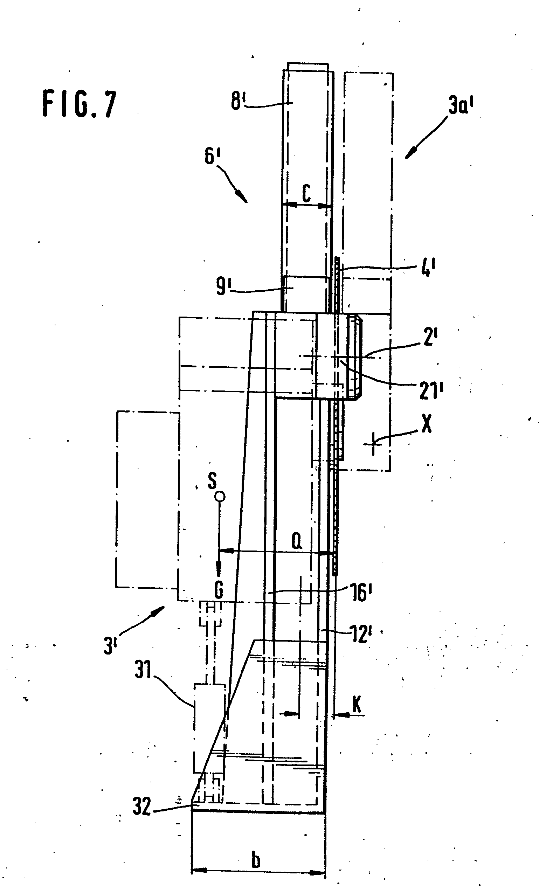

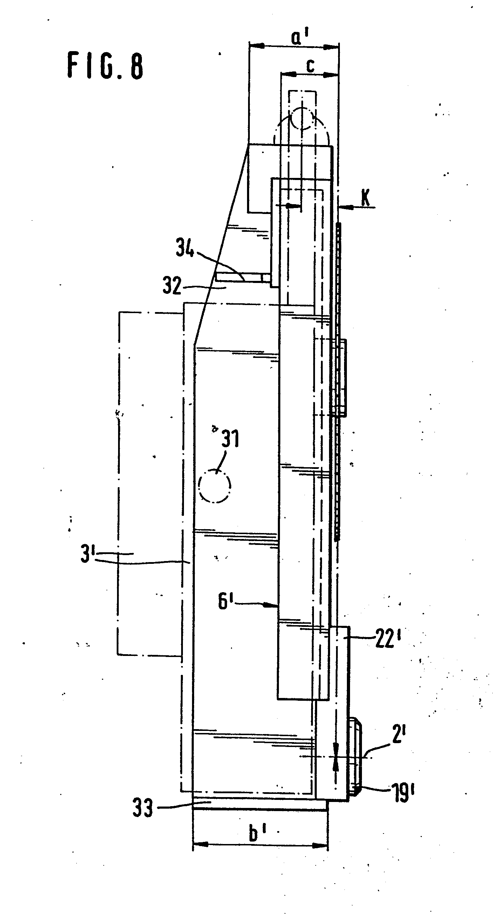

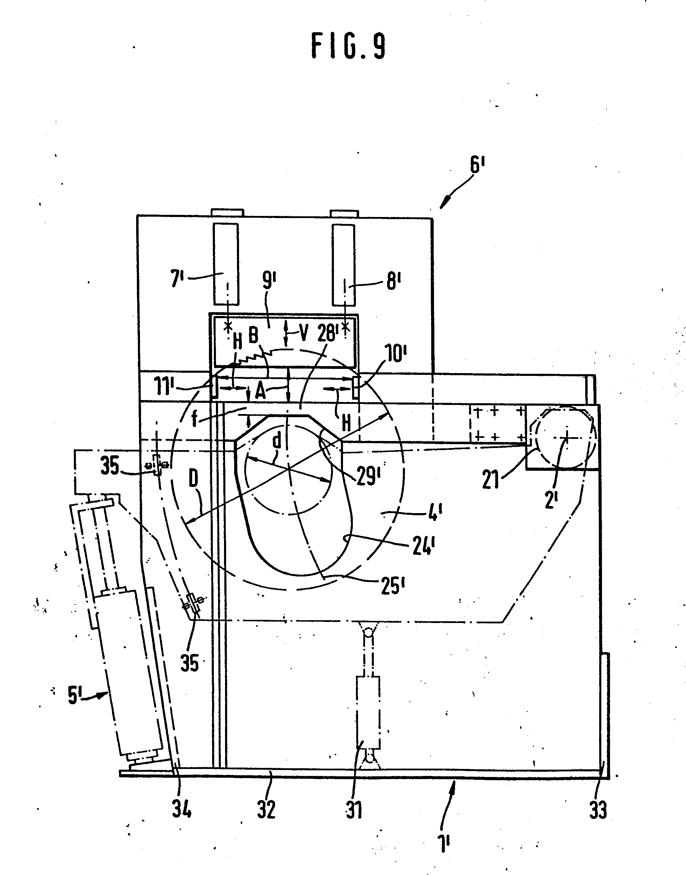

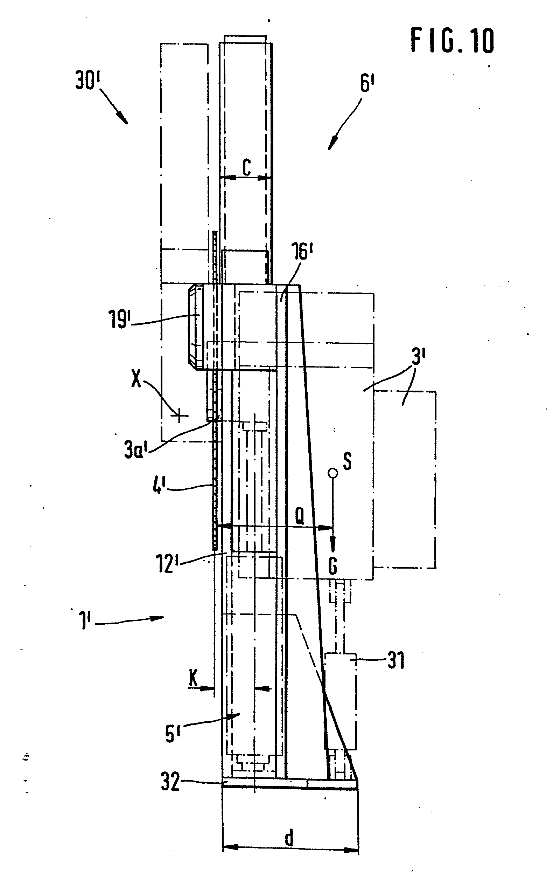

Die in den Figuren 6 bis 10 dargestellte weitere Ausführungsform der Erfindung unterscheidet sich von der
bisher beschriebenen Ausführungsform im wesentlichen
durch eine anders gestaltete Aufnahmeeinrichtung für
das Gewichtsmoment der Schwinge. Während die Schwinge
bei der anhand von Fig. 1 bis Fig. 5 beschriebenen Ausführungsform in zwei Schwenklagern (21 und 23) gelagert ist, ist bei dem Ausführungsbeispiel gemäß Fig. 6
bis 10 die Schwinge 3' lediglich in dem Schwenklager
2' der Trageplatte 12' gelagert, und die Aufnahmeeinrichtung für das Gewichtsmoment der Schwinge ist als
hydraulischer Zylinder 31 ausgebildet. Zur Führung der
Schwinge 3' in der Schwenkebene ist darüber hinaus eine
zwischen der Trageplatte 12' und einer Führungsplatte
16' anliegende Rollenführungseinrichtung 35 vorgesehen.
Da die beiden Ausführungsformen in vielen Einzelteilen
übereinstimmen, werden die übereinstimmenden Teile nicht
nochmals neu beschrieben. Lediglich zur Unterscheidung
der beiden Ausführungsformen sind die im wesentlichen
einander entsprechenden Teile in Fig. 6 bis Fig. 10 jeweils mit "'" gekennzeichnet.

Die Aufnahmeeinrichtung für das Gewichtsmoment der
Schwinge 3' ist als hydraulischer Zylinder 31 ausgebildet, welcher unterhalb des Schwerpunktes der Schwinge 3' an dieser angreift und gegen die bei dieser Ausführungsform mit 32 bezeichnete Bodenplatte abgestützt
ist. Die Abmessung a' und b' der Bodenplatte 32 an den
Stirnseiten läßt erkennen, daß diese Ausführungsform
eine noch schmalere Bauart der Trennvorrichtung ermöglicht. Entsprechend können auch die hier mit 33 und 34 bezeichneten Stützplatten kleiner als bei dem vorbeschriebenen Ausführungsbeispiel gestaltet sein. Für
die Führung der Schwinge 3' in ihrer Schwenkebene
ist die mit 35 bezeichnete Rollenführungseinrichtung
vorgesehen, welche zwischen der Trageplatte 12' und
der Führungsplatte 16' angeordnet ist und sich gegen
diese abstützt.

0111856

## Patentansprüche

1. Trennvorrichtung, insbesondere Kreissäge zur Metallbearbeitung, mit einer an einem Maschinengestell gelagerten Schwinge mit Trennwerkzeug, welche von unten nach oben arbeitet, mit einer Vorschubeinrichtung für die Schwinge und mit Spanneinrichtungen zur Befestigung der zu bearbeitenden Werkstücke, dadurch gekennzeichnet, daß das Maschinengestell (1, 1') eine im wesentlichen vertikal angeordnete, von Stützeinrichtungen (14, 15, 16, 17, 18 bzw. 16', 33, 34) gehaltene Trageplatte (12, 12') aufweist, an welcher das Schwenklager (21, 21') für die Schwinge (3, 3') angeordnet ist, und die Trennebene im wesentlichen mit der Mitte des Schwenklagers (21, 21') fluchtet, und die Vorschubkräfte parallel und nahe oder in der Trennebene an der Schwinge (3, 3') angreifen, und die Spanneinrichtungen (6, 6') oben an der Trageplatte (12, 12') angeordnet sind.

2. Trennvorrichtung nach Anspruch 1, dadurch gekennzeichnet, daß die Schwinge und das Trennwerkzeug auf der gleichen Flachseite der Trageplatte angeordnet sind.

3. Trennvorrichtung nach Anspruch 1, dadurch gekennzeichnet, daß die Schwinge (3, 3') und das Trennwerkzeug (4, 4') auf gegenüberliegenden Flachseiten der Trageplatte (12, 12') angeordnet und über einen eine Ausnehmung (24, 24') in der Trageplatte durchfassenden Schwingenteil (3a, 3a') verbunden sind.

4.  Trennvorrichtung nach einem der Ansprüche 1 bis
    3, dadurch gekennzeichnet, daß der Schwinge (3,
    3') eine Aufnahmeeinrichtung für das Gewichtsmoment der Schwinge zugeordnet ist.

5.  Trennvorrichtung nach Anspruch 4, dadurch gekennzeichnet, daß die Aufnahmeeinrichtung ein an einer
    Stütze (17) angeordnetes, mit dem Schwenklager (21)
    fluchtendes weiteres Schwenklager (23) für einen
    an der Schwinge (3) angeordneten Lagerzapfen (20)
    aufweist.

6.  Trennvorrichtung nach Anspruch 4, dadurch gekennzeichnet, daß die Aufnahmeeinrichtung als hydraulischer Zylinder (31) ausgebildet ist.

7.  Trennvorrichtung nach Anspruch 4, dadurch gekennzeichnet, daß die Aufnahmeeinrichtung als Gegengewichtseinrichtung ausgebildet ist.

8.  Trennvorrichtung nach Anspruch 6 oder 7, dadurch
    gekennzeichnet, daß zur Führung der Schwinge (3')
    in der Schwenkebene eine zwischen Trageplatte (12')
    und einer Führungsplatte (16') oder übergreifend
    auf gegenüberliegenden Seiten gegen die Haupttrageplatte anliegende Rollenführungseinrichtung (35)
    vorgesehen ist.

9.  Trennvorrichtung nach einem der Ansprüche 3 bis
    8, dadurch gekennzeichnet, daß die Trageplatte
    (12, 12') über der Ausnehmung (24, 24') für den
    durchfassenden Schwingenteil (3a, 3a') eine brükkenförmige Gestaltung mit einer dem Schwingenteil
    (3a, 3a') im wesentlichen angepaßten Brückenöff-
    nung (29, 29') aufweist, und die so gebildete Brükke (28, 28') in ihrer Mitte eine geringe Dicke $(f \geq 0)$

aufweist.

10. Trennvorrichtung nach einem der Ansprüche 1 bis
9, dadurch gekennzeichnet, daß an der Trageplatte (12, 12') eine zweite Spanneinrichtung (30,
30') angebracht ist.

0111856

FIG. 1

FIG. 2

0111856

FIG.3

FIG.4

FIG.5

0111856

# FIG.6

FIG.7

FIG. 8

FIG.9

0111856

FIG. 10